(19) **Europäisches Patentamt**

**European Patent Office**

**Office européen des brevets**

(11) Veröffentlichungsnummer: **0 325 698 B1**

(12) # EUROPÄISCHE PATENTSCHRIFT

(45) Veröffentlichungstag der Patentschrift: **26.02.92**

(51) Int. Cl.⁵: **F02M 25/08**

(21) Anmeldenummer: **88116423.0**

(22) Anmeldetag: **05.10.88**

(54) **Vorrichtung zum dosierten Einspeisen flüchtiger Kraftstoffbestandteile in das Ansaugrohr einer Brennkraftmaschine.**

(30) Priorität: **29.01.88 DE 3802664**

(43) Veröffentlichungstag der Anmeldung:
**02.08.89 Patentblatt 89/31**

(45) Bekanntmachung des Hinweises auf die
Patenterteilung:
**26.02.92 Patentblatt 92/09**

(84) Benannte Vertragsstaaten:
**AT BE CH DE ES FR GB IT LI NL SE**

(56) Entgegenhaltungen:
**DE-A- 3 519 292**
**GB-A- 2 066 360**

(73) Patentinhaber: **Firma Carl Freudenberg**
**Höhnerweg 2-4**
**W-6940 Weinheim/Bergstrasse(DE)**

(72) Erfinder: **Beicht, Bernd**
**Schubertweg 7**
**W-6114 Gross-Umstadt(DE)**
Erfinder: **Tinz, Reinhard**
**Oberramstädter Strasse 5**
**W-6101 Gross-Bieberau(DE)**
Erfinder: **Heinemann, Joachim**
**Gabelsbergerstrasse 47**
**W-6940 Weinheim(DE)**

## Beschreibung

Die Erfindung betrifft eine Vorrichtung nach dem Oberbegriff von Anspruch 1.

Eine solche Vorrichtung ist aus der DE-OS 35 19 292 bekannt. Sie soll das Entweichen der im Freiraum des Kraftstoffbehälters einer Brennkraftmaschine stets vorhandenen, flüchtigen Kraftstoffbestandteile in die Atmosphäre verhindern und bedient sich der Verwendung einer speziellen, zwischen dem Freiraum und der Atmosphäre angeordneten Entlüftungsleitung, in der eine Speicherkammer mit einem Absoprtionselement angeordnet ist. Dieses besteht zumeist aus einem durchlässigen Körper aus Aktivkohle, der geeignet ist, ein erhebliches Volumen flüchtigen Kraftstoffes vorübergehend zu speichern. Zur Regenerierung des Absorptionselementes wird Frischluft während des normalen Betriebes der Brennkraftmaschine durch dasselbe hindurchgesogen, wozu eine Leitung dient, die die Speicherkammer mit dem Ansaugrohr der Brennkraftmaschine verbindet. Dabei ist allerdings zu beachten, daß sich bei niedrigen Betriebsdrehzahlen der Brennkraftmaschine und/oder bei einem besonders hohen Sättigungsgrad des Absorptionselementes eine "Überfettung" des von der Brennkraftmaschine angesogenen Kraftstoff - Luftgemisches ergeben kann, wodurch Betriebsstörungen resultieren können. Die Leitung ist daher durch ein elektromagnetisches Sperrventil verschließbar, das hinsichtlich seiner Durchlässigkeit einerseits durch externe Sensoren und andererseits durch den auf sein Schließglied einwirkenden Unterdruck in der Leitung veränderbar ist.

Der Erfindung liegt die Aufgabe zugrunde, eine solche Vorrichtung derart weiterzuentwickeln, daß sowohl eine optimale Regenerierung des Absorptionselementes als auch ein optimales Betriebsverhalten der Brennkraftmaschine gewährleistet ist.

Diese Aufgabe wird erfindungsgemäß bei einer Vorrichtung der eingangs genannten Art mit den kennzeichnenden Merkmalen von Anspruch 1 gelöst. Auf vorteilhafte Ausgestaltungen nehmen die Unteransprüche bezug.

Bei der erfindungsgemäßen Vorrichtung ist dem Sperrventil ein Hilfsventil in Serie unmittelbar vorgeschaltet, wobei das Hilfsventil durch einen Unterdruckversteller schließbar ist, der durch den Differenzdruck zwischen der Steuerkammer und der Atmosphäre betätigbar ist. Bei Erreichen einer niedrigen Betriebsdrehzahl des Verbrennungsmotors ergibt sich hierdurch ein relativ hoher Differenzdruck, was dazu führt, daß der Vordruck des Sperrventils abgesenkt und eine insgesamt verminderte Durchlässigkeit erzielt wird. Eine Überfettung des der Brennkraftmaschine zugeführten Kraftstoff - Luftgemisches wird zuverlässig unterbunden.

Bei Erreichen einer hohen Betriebsdrehzahl der Brennkraftmaschine ergibt sich demgegenüber ein relativ verminderter Differenzdruck an dem Unterdruckversteller, was dazu führt, daß der Vordruck an dem Sperrventil relativ erhöht ist. Die Gesamtdurchlässigkeit ist dementsprechend ebenfalls vergrößert und hat zur Folge, daß der Brennkraftmaschine ein entsprechend vergrößerter Anteil an Frischluft zugeführt wird, der das Absorptionselement durchströmt und dabei eine Anreicherung an Kraftstoffbestandteilen erfahren hat. Das gute Verhalten der Brennkraftmaschine wird hierdurch nicht beeinträchtigt.

Der Gegenstand der vorliegenden Erfindung wird nachfolgend anhand der in der Anlage beigefügten Zeichnung weiter erläutert. Diese zeigt die zu berücksichtigenden Einzelkomponenten teilweise in schematischer Darstellung. Die im linken Teil der Darstellung wiedergegebene Brennkraftmaschine ist mit 2 bezeichnet und durch das die Drosselklappe 3 enthaltende Ansaugrohr 1 mit dem Luftfilter 5 verbunden sowie durch den Auspuffkrümmer 11 mit dem nichtdargestellten Auspuff.

In dem Ansaugrohr 1 ist oberhalb der Drosselklappe 3 die Kraftstoffversorgungseinrichtung 4 vorgesehen, in welcher das durch das Luftfilter 5 zugeführte Frischluftvolumen im erforderlichen Maße mit Kraftstoff versetzt wird. Die dazu erforderlichen Signale werden durch das Steuergerät 6 bereitgestellt, beispielsweise auf der Grundlage der Abgastemperatur und -Zusammensetzung, der Betriebsdrehzahl der Brennkraftmachine und der Umgebungstemperatur. Die entsprechenden Eingangsignale, welche unter Verwendung entsprechender Sensoren erfaßt werden, wurden durch die Pfeile 7, 8, 9, 10 angedeutet. Sie können bei Bedarf in erwünschtem Maße ergänzt werden.

Im rechten Teil der Darstellung ist der zugehörige Kraftstoffbehälter wiedergegeben. Er ist nur teilweise mit Kraftstoff 15 gefüllt und weist oberhalb des Kraftstoffspiegels einen Freiraum 22 auf. Der Verschluß 16 des Kraftstoffbehälters schließt denselben gegenüber der Umgebung hermetisch ab.

Der Freiraum 22 des Kraftstoffbehälters ist durch die Entlüftungsleitung 25 mit der Atmophäre 23 verbunden. Die Entlüftungsleitung 25 enthält die Speicherkammer 18, welche mit einem Granulat aus Aktivkohle gefüllt ist. Die Dimensionierung der Speicherkammer 18 ist dabei so vorgenommen, daß unter normalen Betriebsbedingungen flüchtige Kraftstoffbestandteile die Mündung der Entlüftungsleitung 25 nicht passieren können.

Auf der der Mündung der Entlüftungsleitung 25 gegenüberliegenden Seite der Speicherkammer 18 ist die Leitung 20 angeschlossen, welche die Speicherkammer 18 mit dem Ansaugrohr 1 der Brennkraftmaschine 2 verbindet. In der Leitung 20 ist das elektromagnetische Sperrventil 13 angeordnet, welches bei Außerbetriebsetzung der Brennkraftmaschine 2 geschlossen und durch das Steuergerät 6 betätigbar ist.

Zwischen dem Sperrventil 13 und dem Ansaugrohr (1) ist das Hilfsventil 15. Dieses ist bei Außerbetriebsetzung der Brennkraftmaschine 2 geöffnet durch die Wirkung der Druckfeder 16, welche in der Steuerkammer l4 angeordnet ist und den umlaufenden Stützbund 19 des zugehörigen Schließgliedes 26 auf der einen Seite untergreift. Die andere Seite des Stützbundes 19 liegt auf der der Steuerkammer 14 zugewandten Seite der Stellmembran 26 an, welche die Steuerkammer 14 von der Atmosphäre 23 trennt. Zur Funktion ist folgendes auszuführen:

Während des normalen Betriebes der Brennkraftmaschine 2 ist das Sperrventil 13 statisch geöffnet und das Volumen der durch die Speicherkammer 18 angesogenen Luftmenge wird von dem Hilfsventil 15 geregelt, wobei die Verstellung des Hilfsventils 15 aufgrund einer Messung des Differenzdruckes zwischen dem Druck im Ansaugrohr 1 und im Druck in der Leitung 20 sowie der Atmosphäre 23 erfolgt. Mit ansteigendem Differenzdruck steigt die Durchflußmenge zunächst an bis zum Erreichen eines Abregelpunktes, der vorwiegend durch die Auslegung der Druckfeder 16 und der Stellmembran 26 bestimmt wird. Bei weiterem Anstieg des Differenzdruckes schließt das Hilfsventil 15 und bewirkt eine Verminderung der Durchflußmenge im Leerlauf - und Schubbetrieb des Verbrennungsmotors.

Im Hinblick auf eine nochmals verbesserte Entsorgung der Speicherkammer 18 besteht auch die Möglichkeit, das Hilfsventil ergänzend der vorstehenden Darstellung getaktet anzusteuern. Das tatsächlich durchgesetzte Luftvolumen läßt sich hierdurch feinfühlig den jeweiligen Bedürfnissen anpassen und insbesondere dem jeweiligen Betriebszustand der Brennkraftmaschine 2. Bei Abschaltung derselben schließt das Sperrventil 13 durch den sich ergebenden Spannungsabfall an seinem elektrischen Antrieb durch die Wirkung der Feder 28, wodurch ein Nachlaufen der Brennkraftmaschine auch bei zeitweilig noch anstehendem Unterdruck im Ansaugrohr 1 zuverlässig unterdrückt wird. Ebenso wird bei Unterbrechung der Ansteuerung des Sperrventils (13) durch die Wirkung der Feder eine undosierte Einführung von Kraftstoffdämpfen in das Ansaugrohr (1) ausgeschlossen.

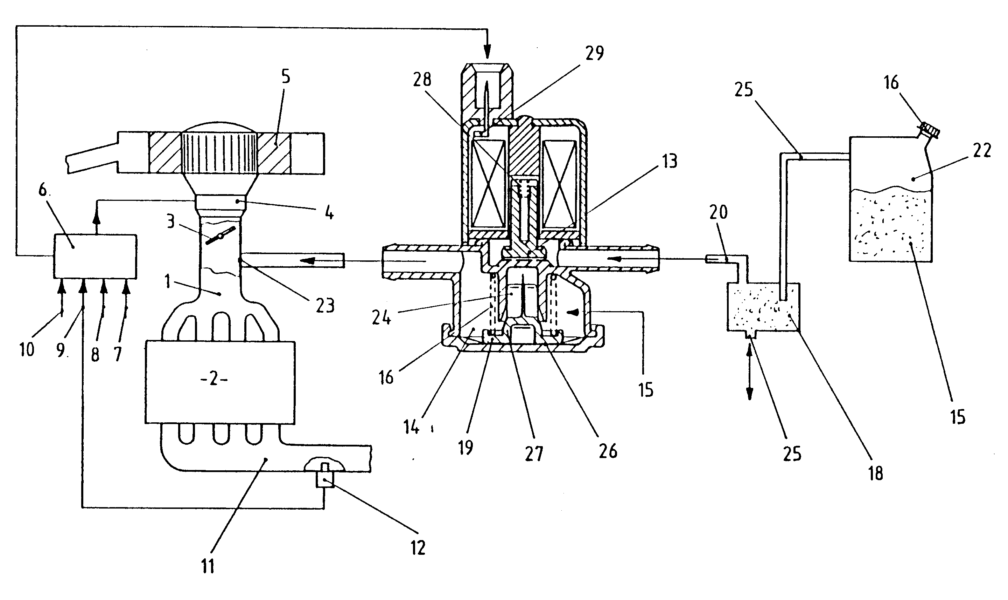

**Patentansprüche**

1. Vorrichtung zum vorübergehenden Speichern und dosierten Einspeisen der im Freiraum (22) einer Tankanlage befindlichen, flüchtigen Kraftstoffbestandteile in das Ansaugrohr (1) einer Brennkraftmaschine (2), umfassend eine den Freiraum (22) mit der Atmosphäre verbindende Entlüftungsleitung (25), in der eine Speicherkammer (18) mit einem Absorptionselement angeordnet ist sowie eine die Speicherkammer (18) mit dem Ansaugrohr (1) verbindende Leitung (20), die durch ein elektromagnetisches Sperrventil (13) verschließbar ist, die eine zwischen Sperrventil (13) und Ansaugrohr (1) befindliche Steuerkammer (14) erweiterten Querschnittes aufweist sowie ein in der Steuerkammer (14) angeordnetes Hilfsmittel zur Veränderung der Durchlässigkeit des Sperrventils (13), dadurch gekennzeichnet, daß das Hilfsmittel aus einem zwischen dem Sperrventil (13) und dem Ansaugrohr (1) befindlichen Hilfsventil (15) besteht, daß das Hilfsventil (15) durch einen Unterdruckversteller verschließbar ist und daß der Unterdruckversteller durch den Differenzdruck zwischen der Steuerkammer (14) und der Atmosphäre (23) betätigbar ist.

2. Vorrichtung nach Anspruch 1, dadurch gekennzeichnet, daß der Unterdruckversteller gegen die Kraft einer Feder (16) wirksam ist.

3. Vorrichtung nach Anspruch 2, dadurch gekennzeichnet, daß die Feder (16) als Druckfeder ausgebildet und in der Steuerkammer (14) angeordnet ist.

4. Vorrichtung nach Anspruch 1 - 3, dadurch gekennzeichnet, daß der Unterdruckversteller aus einer Stellmembran (26) besteht und daß die Stellmembran (26) zwischen der Atmosphäre (23) und der Steuerkammer (14) angeordnet ist.

5. Vorrichtung nach Anspruch 3 und 4, dadurch gekennzeichnet, daß das Hilfsventil (15) ein separates Schließglied (27) aufweist, und daß das Schließglied (27) mit einem Stützbund (19) versehen ist und daß der Stützbund (19) einerseits an der Stellmembran (26) und andererseits an der Druckfeder (16) anliegt.

6. Vorrichtung nach Anspruch 5, dadurch gekennzeichnet, daß das Hilfsventil (15) mit einer parallel zur Bewegungsrichtung des Schließgliedes (27) geöffneten Durchtrittsöffnung versehen ist und daß das Schließglied (27) eine in der Öffnung geführte Verlängerung (24) aufweist.

7. Vorrichtung nach Anspruch 6, dadurch gekennzeichnet, daß das Schließglied (27) und/oder die Öffnung im Bereich der aneinander anlegbaren Dichtflächen des Hilfsventils (15) kegelig ausgebildet sind (ist).

8. Vorrichtung nach Anspruch 1 - 7, dadurch gekennzeichnet, daß das Sperrventil (13) mit einem elektrisch betätigbaren Antrieb versehen ist.

9. Vorrichtung nach Anspruch 8, dadurch gekennzeichnet, daß der Antrieb gegen die Kraft einer Feder wirksam ist und bei einer Betätigung ein Öffnen des Sperrventils (13) bewirkt.

10. Vorrichtung nach Anspruch 8 - 9 dadurch gekennzeichnet, daß der Antrieb mit elektrischen Anschlüssen versehen ist, die sich außerhalb der kraftstoffberührten Teile des Sperrventils (13) befinden.

## Claims

1. An apparatus for the temporary storing and metered feeding of the volatile fuel constituents located in the free space (22) of a tank unit into the intake pipe (1) of an internal-combustion engine (2), comprising a venting line (25), which connects the free space (22) to the atmosphere and in which there is arranged a storage chamber (18) with an absorption element, and a line (20), which connects the storage chamber (18) to the intake pipe (1), can be closed by an electromagnetic check valve (13) and has a control chamber (14) of widened cross-section located between check valve (13) and intake pipe (1), as well as an auxiliary means arranged in the control chamber (14) for changing the admitted through-flow of the check valve (13), characterised in that the auxiliary means comprises an auxiliary valve (15) located between the check valve (13) and the intake pipe (1), in that the auxiliary valve (15) can be closed by a vacuum governor and in that the vacuum governor can be operated by the differential pressure between the control chamber (14) and the atmosphere (23).

2. An apparatus according to claim 1, characterised in that the vacuum governor acts against the force of a spring (16).

3. An apparatus according to claim 2, characterised in that the spring (16) is designed as a compression spring and is arranged in the control chamber (14).

4. An apparatus according to any of claims 1 to 3, characterised in that the vacuum governor comprises an adjusting membrane (26) and in that the adjusting membrane (26) is arranged between the atmosphere (23) and the control chamber (14).

5. An apparatus according to either of claims 3 and 4, characterised in that the auxiliary valve (15) has a separate closing element (27), and in that the closing element (27) is provided with a supporting collar (19) and in that the supporting collar (19) bears on one side against the adjusting membrane (26) and on the other side against the compression spring (16).

6. An apparatus according to claim 5, characterised in that the auxiliary valve (15) is provided with a passage opening, opened parallel to the direction of movement of the closing element (27), and in that the closing element (27) has an extension (24) extending in the opening.

7. An apparatus according to claim 6, characterised in that the closing element (27) and/or the opening in the region of the sealing surfaces of the auxiliary valve (15) which can be brought into contact with each other are(is) of a conical design.

8. An apparatus according to any of claims 1 to 7, characterised in that the check valve (13) is provided with an electrically actuated drive.

9. An apparatus according to claim 8, characterised in that the drive acts against the force of a spring and, when actuated, causes the check valve (13) to open.

10. An apparatus according to either of claims 8 or 9, characterised in that the drive is provided with electrical terminals which are located outside the parts of the check valve (13) which come into contact with the fuel.

## Revendications

1. Dispositif pour un stockage provisoire et une alimentation dosée de composantes volatiles de carburant, se trouvant dans l'espace libre (22) d'une installation de réservoir, dans le tuyau d'aspiration (1) d'un moteur à combustion interne (2), comprenant une conduite d'aération (25) reliant l'espace libre (22) à l'atmosphère dans laquelle on a arrangé une chambre de stockage (18) avec un élément d'absorption ainsi qu'une conduite (20) reliant la chambre de stockage (18) avec le tuyau d'aspiration (1) ladite conduite (20) pouvant être fermée par une soupape d'arrêt (13) électromagnétique qui comprend une chambre de commande (14) à section transversale agrandie se trouvant entre la soupape d'arrêt (13) et le tuyau d'aspiration (1), ainsi que des moyens disposés dans la chambre de commande (14) pour varier la perméabilité de la soupape d'arrêt (13), caractérisé en ce que lesdits moyens sont constitués d'une soupape auxiliaire (15) se trouvant entre la soupape d'arrêt (13) et le tuyau d'aspiration (1), en ce que la soupape auxiliaire (15) peut être fermée par un régulateur à dépression et que le régulateur à dépression est actionné par la pression différentielle entre la chambre de commande (14) et l'atmosphère (23).

2. Dispositif selon la revendication 1, caractérisé en ce que le régulateur à dépression agit contre la force d'un ressort (16).

3. Dispositif selon la revendication 2, caractérisé en ce que le ressort (16) forme un ressort à pression disposé dans la chambre de commande (14).

4. Dispositif selon les revendications 1 à 3, caractérisé en ce que le régulateur à dépression est constitué d'une membrane de réglage (26) disposée entre l'atmosphère (23) et la chambre de commande (14).

5. Dispositif selon les revendications 3 et 4, caractérisé en ce que la soupape auxiliaire (15) présente un élément de fermeture (27) séparé, et en ce que l'élément de fermeture (27) comprend un collet d'appui (19) et en ce que le collet d'appui (19) est adjacent d'un côté à la membrane de réglage (26) et de l'autre côté au ressort à pression (16).

6. Dispositif selon la revendication 5, caractérisé en ce que la soupape auxiliaire (15) comprend une ouverture de passage, ouverte parallèlement à la direction du mouvement de l'élément de fermeture (27) et en ce que l'élément de fermeture (27) présente une rallonge (24) guidée dans ladite ouverture.

7. Dispositif selon la revendication 6, caractérisé en ce que l'élément de fermeture (27) et/ou l'ouverture sont (est) de forme conique au niveau des surfaces d'étanchéité de la soupape auxiliaire (15) qui peuvent être appliquées l'une contre l'autre.

8. Dispositif selon les revendications 1 à 7, caractérisé en ce que la soupape d'arrêt (13) comprend une commande électrique.

9. Dispositif selon la revendication 8, caractérisé en ce que ladite commande agit contre la force d'un ressort et provoque l'ouverture de la soupape d'arrêt (13) lors de sa mise en action.

10. Dispositif selon les revendications 8 et 9 caractérisé en ce que ladite commande est pourvue de raccords électriques se trouvant en dehors des parties de la soupape d'arrêt (13) en contact avec le carburant.